# FASCICULE DE BREVET EUROPEEN

(11) **EP 2 440 963 B1**
(45) Date de publication et mention de la délivrance du brevet: **21.05.2014**
(21) Numéro de dépôt: 10734791.6
(22) Date de dépôt: 07.06.2010
(51) Int. Cl.: G02C 7/06, G02C 7/02

(54) **RÉALISATION D'UN VERRE DE LUNETTES PROGRESSIF PERSONNALISE EN FONCTION D'UNE PERCEPTION DE FLOU**
HERSTELLUNG EINES NACH UNSCHÄRFEWAHRNEHMUNG INDIVIDUELL ANGEPASSTEN GLEITSICHTBRILLENGLASES
MAKING OF PROGRESSIVE SPECTACLE LENS CUSTOMIZED BASED ON BLUR PERCEPTION

(30) Priorité: 10.06.2009 FR 0953831
(43) Date de publication de la demande: 18.04.2012
(73) Titulaire: Essilor International (Compagnie Générale d'Optique), 94220 Charenton-le-Pont (FR)
(72) Inventeur: DROBE, Björn, F-94220 Charenton-le-Pont (FR); GIRAUDET, Guillaume, F-94220 Charenton-le-Pont (FR)
(74) Mandataire: Cabinet Plasseraud
(86) Numéro de dépôt international: PCT/FR2010/051120
(87) Numéro de publication internationale: WO 2010/142899

(56) Documents cités:
- EP-A1- 1 837 699
- WO-A1-00/55678
- WO-A2-03/019269
- US-B1- 6 652 096

## Description

La présente invention concerne la réalisation d'un verre de lunettes progressif, qui est personnalisé en fonction d'une perception de flou d'un porteur auquel le verre est destiné.

De façon connue, une différence entre l'amétropie d'un porteur de lunettes et la correction ophtalmique qui est apportée par un verre de lunettes utilisé par ce porteur produit un brouillage de sa vision, appelé flou («blur» en anglais). Lorsque ce flou résulte d'une défocalisation de l'image en arrière de la rétine, il est spontanément supprimé par une accommodation de l'oeil du porteur, au retard accommodatif («accommodation lag» en anglais) près et tant que la limite d'accommodation oculaire du porteur n'est pas dépassée. Il en résulte cependant une fatigue visuelle pour le porteur. Mais d'une façon générale, en dehors de la faculté d'accommodation oculaire, le flou qui résulte d'une différence entre l'amétropie d'un porteur et la correction ophtalmique d'un verre de lunettes qui est utilisé par celui-ci constitue un défaut de sa vision.

Les verres de lunettes progressifs permettent à un porteur presbyte de voir clairement à des distances variables à travers une zone de vision de loin du verre, une zone de vision de près, et à travers un canal qui relie les zones de vision de loin et de près. Mais ils présentent en dehors de ces zones des variations de puissance optique et d'astigmatisme qui sont à l'origine de flou visuel pour le porteur. De tels verres progressifs sont alors conçus pour réaliser un compromis entre la largeur du champ visuel dans lequel la puissance optique et l'astigmatisme du verre correspondent à la prescription ophtalmique qui est établie pour le porteur, et un flou qui reste limité pour des directions de regard qui traversent le verre en dehors des zones de vision de loin et de près. En particulier, le flou à l'extérieur des zones de vision de loin et de près d'un verre progressif est d'autant plus élevé que ce verre possède une valeur d'addition qui est élevée. On rappelle que l'addition d'un verre progressif est la différence entre les valeurs de puissance optique de ce verre respectivement pour une direction de référence pour la vision de près et une direction de référence pour la vision de loin.

Par ailleurs, de nombreuses études physiologiques ont montré que la perception du flou visuel est très variable entre des sujets différents. Ainsi, deux porteurs de lunettes qui ont des prescriptions ophtalmiques identiques et qui sont équipés de verres de lunettes aussi identiques peuvent être gênés différemment par le flou qui est produit par ces verres, pour certaines directions obliques de leur regard. Par exemple, un premier porteur peut se déclarer gêné par ce flou alors qu'un second porteur peut confirmer un bon confort visuel. Le compromis qui est réalisé par ces verres identiques entre leur fonction ophtalmique et le flou résiduel qu'ils produisent est alors approprié pour le second porteur, et doit être modifié pour le premier. Il est donc nécessaire de tenir compte de la sensibilité de chaque porteur à la perception du flou lors de l'attribution d'un verre progressif à ce porteur.

Néanmoins, une tolérance du flou qui est faible, voire très faible, d'un futur porteur de verres progressifs peut être difficilement compatible avec la valeur d'addition qui est prescrite pour ce porteur, lorsque cette valeur d'addition est élevée. Il est donc aussi nécessaire d'évaluer la sensibilité de chaque porteur au flou visuel de façon cohérente avec les contraintes qui résultent de la valeur d'addition qui est prescrite pour ce porteur.

Un premier but de la présente invention est donc de fournir un verre de lunettes progressif qui est personnalisé en fonction de la perception du flou par le porteur auquel le verre est destiné.

Un deuxième but de l'invention consiste à déterminer le flou qui est toléré par le porteur en liaison avec la valeur d'addition de puissance optique qui est prescrite pour lui, pour que le niveau du flou qui est déterminé soit compatible avec la valeur d'addition lors de la réalisation du verre progressif.

Pour atteindre ces buts et d'autres, l'invention propose un procédé de réalisation d'un verre de lunettes progressif qui est destiné à un porteur identifié, et qui est personnalisé en fonction d'une perception de flou par ce porteur, le procédé comprenant les étapes suivantes :
/1/ obtenir une prescription ophtalmique pour le porteur, comprenant une valeur prescrite de puissance optique en vision de loin, une valeur prescrite d'addition et une caractérisation d'un astigmatisme dudit porteur ;
/2/ obtenir une valeur-seuil de perception de flou pour le porteur ;
/3/ obtenir des valeurs de flou respectives pour une série de verres ophtalmiques progressifs correspondant chacun à la prescription du porteur, et pour une direction de regard de référence qui est décalée transversalement par rapport à une ligne méridienne des verres, cette direction de regard de référence étant déterminée par une valeur de référence d'élévation le long de la ligne méridienne et une valeur de référence d'azimut mesurée transversalement à partir d'un plan vertical contenant une direction de regard droit devant le porteur lorsque la tête du porteur est elle-même verticale, la série de verres comprenant plusieurs verres qui correspondent à des valeurs variables de flou pour les valeurs de référence d'élévation et d'azimut ;
/4/ sélectionner un verre final à partir d'au moins un verre initial appartenant à la série utilisée à l'étape /3/, le verre final correspondant à la prescription du porteur et ayant une valeur de flou pour les valeurs de référence d'élévation et d'azimut qui présente un écart inférieur à 0,1 dioptrie en valeur absolue, par rapport à la valeur-seuil de perception de flou obtenue pour le porteur à l'étape /2/ ; et
/5/ réaliser le verre de lunettes qui est destiné au porteur conformément au verre final sélectionné à l'étape /4/.

La valeur de référence d'azimut est comprise entre 10° et 20°, en valeur absolue, ou est obtenue à partir d'une mesure d'une amplitude de mouvements d'yeux effectués par le porteur.

Selon l'invention, l'étape /2/ comprend elle-même les deux sous-étapes suivantes :
/2-1/ sélectionner un critère de perception de flou en fonction de la valeur d'addition qui est prescrite pour le porteur, parmi les critères suivants :
   - lorsque cette valeur d'addition est inférieure ou égale à une première valeur fixée d'addition, la valeur-seuil de perception de flou est une première limite de flou en deçà de laquelle le porteur ne détecte pas le flou, et au delà de laquelle il détecte le flou ;
   - lorsque la valeur d'addition prescrite pour le porteur est comprise entre la première valeur fixée d'addition et une seconde valeur fixée d'addition qui est supérieure à la première valeur fixée d'addition, la valeur-seuil de perception de flou est une deuxième limite de flou en deçà de laquelle le porteur ne ressent pas de gêne visuelle qui soit causée par le flou, et au-delà de laquelle il ressent une gêne visuelle qui est causée par le flou ; et
   - lorsque la valeur d'addition prescrite pour le porteur est supérieure ou égale à la seconde valeur fixée d'addition, la valeur-seuil de perception de flou est une troisième limite de flou en deçà de laquelle le porteur est capable de lire des caractères alphanumériques, et au-delà de laquelle il n'est plus capable de lire les caractères alphanumériques à cause du flou ; puis
/2-2/ déterminer la valeur-seuil de perception de flou pour le porteur en utilisant le critère sélectionné.

Ainsi, selon un premier aspect de l'invention, le verre progressif qui est attribué au porteur est sélectionné non seulement en fonction de la prescription ophtalmique du porteur, mais aussi pour que le verre produise une valeur de flou pour la direction de regard de référence, qui correspond sensiblement à un seuil de perception de flou établi pour le porteur. Ce seuil de perception de flou qui est reproduit pour la direction de regard de référence constitue donc une personnalisation du verre progressif, en plus de la conformité du verre à la prescription ophtalmique du porteur. Cette personnalisation détermine au moins partiellement le design du verre progressif qui est fourni au porteur.

Selon un second aspect de l'invention, le seuil de perception du flou est déterminé pour le porteur selon un critère qui est varie en fonction de la valeur d'addition qui a été prescrite pour lui :
- pour les faibles valeurs d'addition, le critère est celui de la détection du flou par le porteur ;
- pour des valeurs intermédiaires de l'addition, le critère est celui d'une gêne ressentie qui est due au flou ; et
- pour les valeurs élevées d'addition, le critère est celui de la perte de lisibilité d'un caractère alphanumérique.

Le critère qui est utilisé pour déterminer la valeur du flou à attribuer à la direction de regard de référence, dans le verre progressif qui est fourni au porteur, est donc d'autant moins exigent que la valeur d'addition prescrite est élevée. Or pour un même porteur, la valeur-seuil de perception du flou qui est obtenue est plus élevée en remplaçant le critère de la détection du flou par celui de la gêne ressentie, et encore plus élevée en remplaçant ce dernier par celui de la lisibilité. De cette façon, la valeur du flou qui est associée à la direction de regard de référence est compatible avec la valeur d'addition, pour déterminer le design du verre progressif qui est fourni au porteur. Cette compatibilité est assurée même lorsque la valeur d'addition est élevée.

En outre, lorsque la valeur d'addition qui est prescrite pour le porteur est faible, le critère qui est le plus exigent est utilisé pour caractériser la perception du flou par le porteur. Dans ce cas, le verre procure au porteur faiblement presbyte une sensation de bonne acuité visuelle pour toutes les valeurs d'azimut inférieures à la valeur de référence d'azimut, au moins pour la valeur de référence d'élévation.

Selon un perfectionnement de l'invention, la valeur de flou qui est obtenue à l'étape /3/ pour chaque verre de la série est calculée comme une somme qui comprend les deux contributions suivantes :
- une première contribution positive qui varie en fonction d'une première différence absolue entre d'une part une valeur de puissance optique déduite de la prescription du porteur pour la valeur de référence d'élévation, et d'autre part une valeur de puissance optique du verre pour les valeurs de référence respectives d'élévation et d'azimut ; et
- une seconde contribution positive qui varie en fonction d'une seconde différence absolue entre, d'une part la caractérisation de l'astigmatisme du porteur obtenue à l'étape /1/, et d'autre part une caractérisation d'astigmatisme du verre pour les valeurs de référence respectives d'élévation et d'azimut.

La première contribution varie en outre en fonction de la valeur d'addition du verre de sorte que, pour au moins une valeur fixée de la première différence, la première contribution est une fonction croissante ou croissante par paliers de la valeur d'addition du verre. Ainsi, la première contribution est d'autant plus élevée que le porteur est presbyte. De cette façon, la personnalisation du verre qui est proposée par l'invention prend en compte la faculté résiduelle d'accommodation du porteur qui lui permet de compenser un défaut de puissance du verre, notamment pour la direction de regard de référence. L'exigence de réduction du flou pour le verre, pour la direction de regard de référence, n'est donc pas surévaluée par rapport au besoin réel du porteur.

D'autres particularités et avantages de la présente invention apparaîtront dans la description ci-après d'exemples de mise en oeuvre non limitatifs, en référence aux dessins annexés, dans lesquels :
- les figures 1a et 1b sont respectivement des vues latérale et en perspective d'un verre de lunettes réalisé selon l'invention ;
- les figures 2a à 2c sont trois diagrammes de variation de flou, respectivement pour des verres progressifs d'addition 1,00 dioptrie, 2,00 dioptries et 3,00 dioptries ; et
- les figures 3a et 3b illustrent deux tests de perception de flou pouvant être utilisés dans des mises en oeuvre de l'invention.

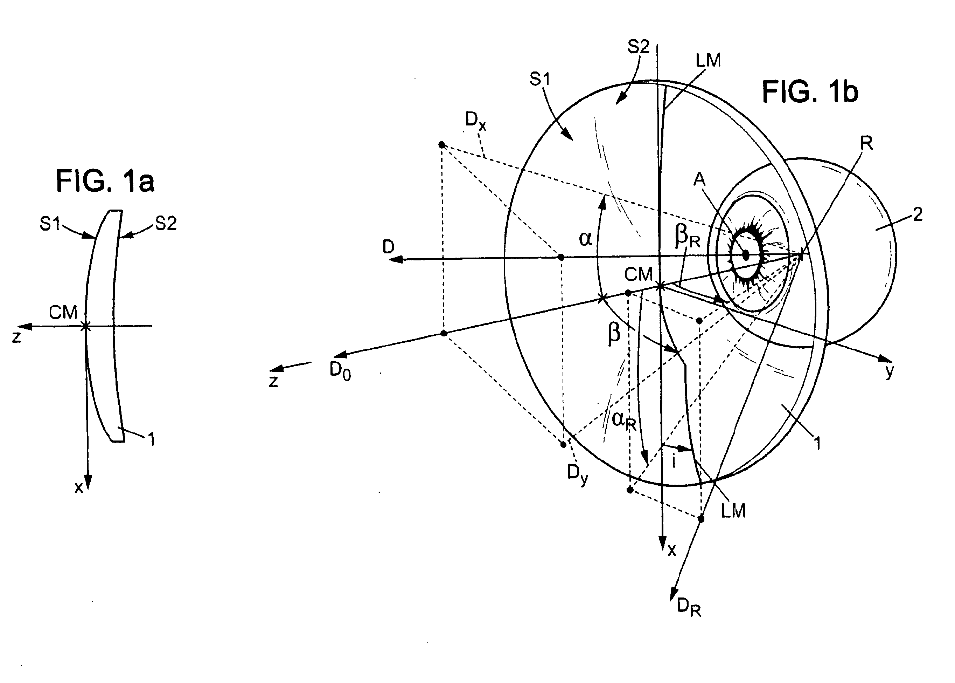

Pour raison de clarté, les dimensions des éléments qui sont représentés sur les figures 1a et 1b ne correspondent pas à des dimensions réelles, ni à des rapports de dimensions réels. En outre, des références ou des notations qui sont reprises identiquement sur des figures différentes désignent des éléments identiques, ou qui ont des fonctions identiques.

Dans la suite de la description, les paramètres optiques et physiologiques qui ne sont pas précisés et qui sont nécessaires pour calculer les caractéristiques optiques des verres de lunettes sont pris égaux à leurs valeurs usuelles, connues de l'Homme du métier. En particulier, la distance de vision de près est égale à 40 cm (centimètre).

Conforment aux figures 1a et 1b, un verre de lunettes ophtalmiques 1 comprend une portion de matériau transparent qui est limitée par une face antérieure S1 et une face postérieure S2 du verre. Les faces S1 et S2 sont respectivement convexe et concave. Le verre 1 peut être constitué d'un matériau quelconque qui est adapté pour l'application ophtalmique. Ce peut être un matériau minéral ou organique, ou éventuellement un matériau hybride, ou encore une combinaison de plusieurs portions juxtaposées de différents matériaux transparents.

La figure 1b montre le verre 1 devant un oeil 2 d'un porteur, tel que ce verre est destiné à être utilisé lorsqu'il est assemblé dans une monture de lunettes (non représentée) placée sur le visage du porteur. Le verre 1 est alors fixe par rapport au visage du porteur, mais l'oeil 2 peut tourner derrière le verre. D désigne une direction de regard quelconque du porteur. Elle passe par le centre de rotation R de l'oeil 2, et par un sommet A du cristallin, couramment appelé apex. La direction D varie lorsque l'oeil 2 tourne autour du centre R.

Par ailleurs, le verre 1 possède une croix de montage («fitting cross» en anglais) CM qui est située sur sa face antérieure S1. On définit alors un repère orthonormé ayant pour origine la croix de montage CM, avec des axes qui sont notés x, y et z. L'axe z est confondu avec une direction de regard D₀ du porteur lorsqu'il regarde droit devant lui. Les axes x et y sont alors approximativement tangents à la surface S1 à la croix de montage CM. L'axe x est vertical lorsque le porteur du verre 1 tient sa tête verticalement, et est orienté vers le bas. L'axe y est horizontal, et est orienté vers le nez du porteur pour chaque verre de la paire de lunettes. Dₓ et D_{y} désignent les projections de la direction de regard D sur les plans xz et yz, respectivement. A l'intérieur du plan xz, α est l'angle entre la direction D₀ et la projection Dₓ, et est appelé hauteur de la direction de regard D. De même, β est l'angle entre la direction D₀ et la projection D_{y} à l'intérieur du plan yz, et est l'azimut de la direction de regard D. De cette façon, les valeurs d'élévation α sont positives et négatives pour des directions de regard D qui passent en dessous de et au dessus de la croix de montage CM, respectivement. Simultanément, les valeurs d'azimut β sont positives lorsque l'oeil est tourné vers le nez du porteur, et négatives lorsque l'oeil est tourné vers le côté temporal correspondant.

Le verre 1 est un verre progressif. Autrement dit, il possède une puissance optique qui est variable en fonction de la direction de regard D. Cette puissance optique résulte des formes respectives des faces S1 et S2, ainsi que de la valeur de l'indice de réfraction du matériau transparent qui constitue le verre. Le verre progressif est caractérisé par une valeur de puissance optique qui est produite pour une direction de référence pour la vision de loin à travers le verre, et par une autre valeur de puissance optique qui est produite pour une direction de référence pour la vision de près. On définit alors l'addition du verre progressif, qui est notée Add et qui est la différence entre les valeurs respectives de puissance optique pour les directions de référence pour la vision de loin et pour la vision de près. La valeur de puissance optique pour la vision de près est supérieure à celle pour la vision de loin, de sorte que l'addition a des valeurs positives. De façon connue, les variations de la puissance optique d'un verre progressif engendrent des variations d'un astigmatisme de ce verre, qui est connu sous l'appellation d'astigmatisme involontaire («unwanted astigmatism»).

Un verre progressif est alors caractérisé par les distributions des valeurs de puissance optique et d'astigmatisme, qui sont des fonctions des valeurs d'élévation α et d'azimut β de la direction de regard D. Ces distributions caractérisent le design du verre progressif. De façon connue, deux verres progressifs qui possèdent des valeurs de puissance optique qui sont identiques pour les directions de référence des visions de loin et de près, peuvent différer par leurs variations de puissance optique et d'astigmatisme en dehors de ces directions de référence. Dans le jargon de l'Homme du métier, ces verres progressifs sont différents par leurs designs respectifs.

La figure 1b montre aussi une ligne méridienne LM du verre progressif 1. Cette ligne méridienne est la trace de la direction de regard D dans la face S1 du verre lorsque le porteur regarde des objets qui sont situés devant lui à des distances variables. La ligne méridienne LM relie les directions de référence pour la vision de loin et la vision de près. En outre, la direction de référence pour la vision de près est décalée en azimut vers le nez du porteur, par rapport à la direction de référence pour la vision de loin, d'un angle qui est noté i et est appelé inset. Usuellement, l'inset i est compris entre 4 et 6,5° (degré).

De façon aussi connue, la prescription ophtalmique d'un sujet presbyte comporte une valeur prescrite de puissance optique pour la vision de loin, une valeur prescrite d'addition, et une caractérisation de l'astigmatisme du porteur.

Le verre qui est réalisé selon l'invention et fourni au sujet presbyte est sélectionné à partir d'un verre initial, ce dernier étant issu d'une série de verres progressifs qui sont disponibles.

Cette série de verres progressifs comporte plusieurs verres qui correspondent à la prescription du porteur, et qui sont appelés verres initiaux dans la présente description de l'invention. On détermine alors une valeur du flou que produirait chacun de ces verres initiaux pour le porteur, pour une direction de regard de référence qui est fixée. Cette direction de regard de référence est notée D_{R}, et est associée à une valeur de référence α_{R} de la hauteur ainsi qu'à une valeur de référence β_{R} de l'azimut.

La valeur de référence d'azimut β_{R} peut être comprise entre 10° et 20°, de préférence entre 13° et 17°, en valeur absolue. De préférence, elle est positive, de sorte que la direction D_{R} soit décalée par rapport au plan xz vers le nez du porteur. Alternativement, la valeur β_{R} peut être obtenue à partir d'une mesure d'une amplitude de mouvements d'yeux effectués par le futur porteur du verre. Une telle mesure des mouvements oculaires du porteur est supposée connue, et on pourra se reporter à l'un des nombreux documents disponibles qui décrivent un mode opératoire pour effectuer une telle mesure. L'utilisation d'une direction de regard de référence qui est elle-même déterminée en fonction du porteur permet d'ajuster la largeur du champ du verre dans lequel le flou est limité par l'invention, à la partie du verre qui sera la plus utilisée par le porteur.

De préférence aussi, la direction de regard de référence D_{R} peut traverser l'un au moins des verres progressifs de la série qui est utilisée dans une zone de vision de près ou dans une zone de vision de loin de ce verre, ou à une limite latérale d'une telle zone. Lorsque la direction D_{R} traverse ou est à la limite de la zone de vision de près, la valeur de référence d'élévation α_{R} peut être comprise entre 20° et 45°, de préférence entre 26° et 38°. Dans ce cas, la valeur de référence d'azimut β_{R} est de préférence supérieure à l'inset i de l'un au moins des verres de la série. Lorsque la direction D_{R} traverse ou est à la limite de la zone de vision de loin, la valeur de référence d'élévation α_{R} peut être comprise entre -10° et 2° par rapport à la direction regard D₀ qui passe par la croix de montage CM de chaque verre.

A titre d'illustration, on supposera dans la suite que la direction de regard de référence D_{R} correspond à la valeur de référence d'élévation α_{R} de 36° et à la valeur de référence d'azimut β_{R} de 20°. Si l'inset i des verres est égal à 5° environ, la direction D_{R} est décalée d'environ 15° par rapport à la direction de référence pour la vision de près en direction du nez du porteur.

La valeur du flou de chaque verre initial pour la direction D_{R} est calculée comme une somme d'une première contribution de défocalisation («defocus») et d'une seconde contribution d'astigmatisme, chacune positive.

La première contribution dépend de la valeur absolue de la différence entre d'une part une valeur de puissance optique qui est déduite de la prescription du porteur pour la valeur de référence d'élévation α_{R}, et d'autre part une valeur de la puissance optique du verre pour les valeurs de référence d'élévation α_{R} et d'azimut β_{R}. La valeur de puissance optique qui est déduite de la prescription du porteur peut être la valeur prescrite pour la vision de loin lorsque la valeur α_{R} est égale à l'élévation de la direction de référence pour la vision de loin. Dans l'exemple de la présente description où la valeur α_{R} est égale à 36° et correspond à l'élévation de la direction de référence pour la vision de près, la puissance optique qui est déduite de la prescription est égale à la valeur prescrite pour la vision de loin augmentée de la valeur prescrite pour l'addition. Par ailleurs, la valeur de la puissance optique du verre pour les valeurs d'élévation α_{R} et d'azimut β_{R} est couramment désignée par puissance-porteur pour la direction D_{R}, dans le jargon de l'Homme du métier.

La première contribution, qui est notée C₁, résulte donc d'une insuffisance de la correction de puissance optique qui est procurée au porteur par chaque verre initial pour la direction D_{R}, par rapport à une correction théorique qui est déduite de sa prescription. En outre, cette première contribution peut varier en fonction de la valeur d'addition, pour tenir compte d'une faculté d'accommodation résiduelle du porteur.

Selon un mode de calcul possible de la première contribution au flou de chaque verre initial, celle-ci est égale à la différence absolue entre la valeur de puissance optique qui est déduite de la prescription, notée P, et la puissance-porteur, notée PPO, multipliée par un facteur lui-même égal à :
zéro lorsque la valeur d'addition Add du verre est inférieure ou égale à une première valeur fixée d'addition, notée Add₁ : C₁ = 0 si Add ≤ Add₁ ;
un demi lorsque la valeur d'addition Add du verre est comprise entre la première valeur fixée d'addition et une seconde valeur fixée d'addition, notée Add₂ : C₁ = 0,5 x |P - PPO| si Add₁ < Add < Add₂ ;et
l'unité lorsque la valeur d'addition Add du verre est supérieure ou égale à la seconde valeur fixée d'addition : C₁ = |P - PPO| si Add ≥ Add₂.

Autrement dit, l'accommodation résiduelle du porteur est supposée suffisante pour compenser le défaut de correction en puissance optique lorsque l'addition est inférieure ou égale à Add₁. Elle permet de compenser partiellement ce défaut de correction lorsque l'addition est intermédiaire entre Add₁ et Add₂, et elle n'intervient plus au-delà de A₂. Ainsi, la première contribution au flou est une fonction croissante par paliers de l'addition, à valeur constante de la première différence entre la puissance optique déduite de la prescription et la puissance-porteur.

Selon un autre mode de calcul possible de la première contribution au flou de chaque verre initial, celle-ci est égale à la différence absolue entre la valeur de puissance optique qui est déduite de la prescription et la puissance-porteur, divisée par une fonction décroissante de la valeur d'addition du verre, ou divisée par une fonction croissante d'une amplitude d'accommodation déterminée pour le porteur. Ce second mode de calcul est un affinage du précédent. Par exemple, la fonction de l'amplitude d'accommodation du porteur peut être égale à exp(AA), où exp désigne la fonction exponentielle et AA est l'amplitude d'accommodation du porteur. Cette amplitude d'accommodation peut elle-même être calculée d'après la formule de Hofstetter en fonction de l'âge AG du porteur: AA(dioptries) = 18,5 - AG/3 lorsque AG est inférieur à 55,5 ans, et AA est nulle pour un porteur de plus de 55,5 ans.

La seconde contribution à la valeur de flou d'un verre initial résulte du désaccord entre l'astigmatisme qui a été diagnostiqué pour le porteur d'une part, et la valeur d'astigmatisme du verre pour la direction D_{R} d'autre part. Dans le jargon de l'Homme du métier, cette seconde contribution dépend de l'astigmatisme résultant, noté ASR. Par exemple, la seconde contribution, notée C₂, peut être égale à une différence absolue entre la caractérisation d'astigmatisme du porteur qui est indiquée dans la prescription et la caractérisation d'astigmatisme du verre pour les valeurs de référence d'élévation α_{R} et d'azimut β_{R}, divisée par 2^{1/2}. Ainsi : C₂ = ASR/2^{1/2}.

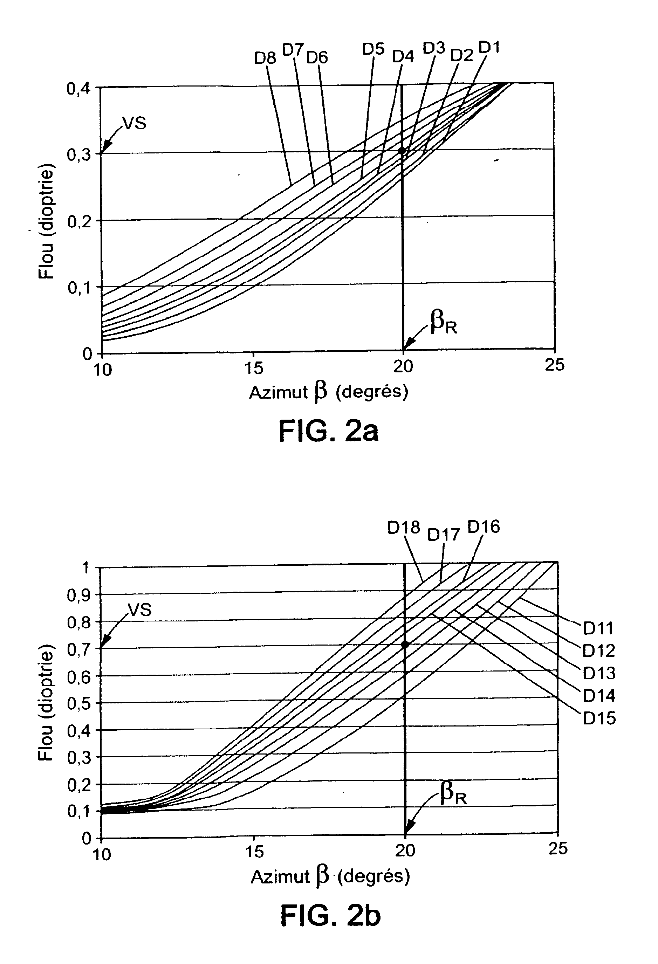

La figure 2a est un diagramme qui représente les variations du flou d'un ensemble de huit verres initiaux en fonction de l'azimut β, pour la valeur de référence d'élévation α_{R} de 36° (degré). Ces huit verres, qui sont désignés respectivement par D1-D8, ont une même valeur d'addition égale à 1,00 dioptrie, correspondant à un sujet presbyte jeune. Ils sont distingués par des designs différents. Dans ce cas, la première contribution C₁ au flou des verres a été déterminée conformément au premier mode de calcul présenté plus haut, en supposant que la première valeur d'addition fixée Add₁ est supérieure à 1,00 dioptrie. Dans ce cas, le flou des verres ne comporte que la seconde contribution C₂ qui a été calculée comme indiqué ci-dessus.

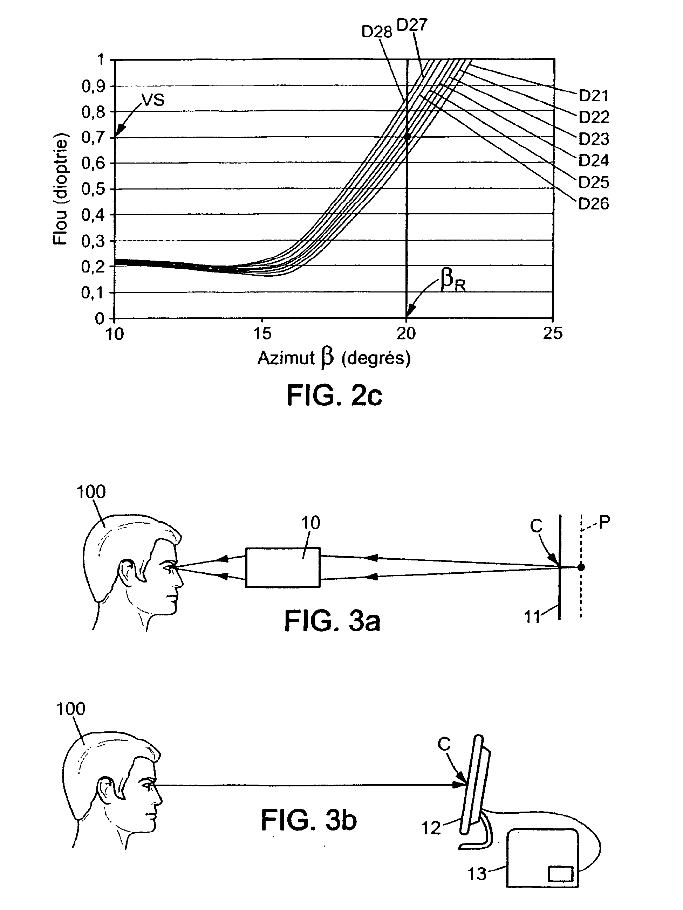

Les figures 2b et 2c correspondent à la figure 2a pour deux autres ensembles de huit verres initiaux, ayant une addition de 2,00 dioptries (figure 2b : verres D11 à D18) et 3,00 dioptries (figure 2c : verres D21 à D28). Le flou de chaque verre a été calculé comme précédemment, en supposant que les première et seconde valeurs d'addition fixées Add₁ et Add₂ sont respectivement égales à 1,6 dioptries et 2,4 dioptries. La figure 2b correspond au cas d'un porteur qui présente un niveau moyen presbytie, et la figure 2c au cas d'un porteur qui présente un niveau avancé de presbytie.

On détermine ensuite une valeur-seuil de perception du flou pour le porteur auquel le verre final est destiné. Cette valeur-seuil est déterminée selon un critère de perception du flou qui varie en fonction de la valeur d'addition prescrite pour le porteur. Il s'agit d'un critère de détection de flou par le sujet lorsque son addition est inférieure à une première valeur fixée, d'un critère de gêne visuelle due au flou lorsque son addition est intermédiaire entre cette première valeur fixée et une seconde valeur fixée, et d'un critère de perte de lisibilité lorsque son addition est supérieure à cette seconde valeur fixée. Ces première et seconde valeurs d'addition qui sont fixées pour sélectionner le critère de perception du flou à utiliser peuvent être comprises respectivement entre 1,50 et 1,75 dioptries, et entre 2,25 et 2,50 dioptries. Lorsque la première contribution C₁ au flou de chaque verre initial est déterminée selon le premier mode de calcul qui a été présenté plus haut, les valeurs Add₁ et Add₂ introduites dans ce mode de calcul peuvent être respectivement identiques à la première et à la seconde valeur fixée qui sont utilisées pour sélectionner le critère de perception du flou.

De préférence, la valeur-seuil de perception de flou est déterminée pour le porteur en réalisant un test de la perception du flou par ce porteur, et en utilisant le critère de perception qui a été sélectionné comme il vient d'être décrit. Ce test de perception du flou peut comprendre une visualisation par le porteur d'une image à travers un système optique, avec le système optique qui est adapté pour produire une défocalisation variable de l'image par rapport à un réglage de mise au point de cette image regardée par le porteur. La figure 3a illustre le principe d'un tel test. Le sujet 100 regarde un caractère alphanumérique C qui est inscrit sur un écran 11 à travers le système optique 10. Le caractère C est inscrit sur l'écran 11 avec un contour fin et précis, et le système optique 10 est réglé pour focaliser sur la rétine du sujet 100 de la lumière issue de points situés dans un plan P qui est décalé par rapport à l'écran 11. Pendant le test, le réglage du système 10 est varié pour rapprocher ou éloigner le plan P par rapport à l'écran 11.

Selon une autre possibilité, le test de perception de flou peut comprendre une visualisation par le porteur d'une image qui est affichée sur un écran, avec un flou simulé qui est introduit numériquement dans les données d'affichage de l'image. Sur la figure 3b, les références 12 et 13 désignent l'écran d'affichage et une unité informatique qui calcule l'image et commande son affichage. C désigne encore un caractère alphanumérique, mais qui est affiché pendant des périodes successives avec des flous variables qui sont calculés par l'unité 13.

Un des verres initiaux est alors sélectionné, correspondant à la prescription du porteur et ayant une valeur de flou pour les valeurs de référence d'élévation et d'azimut qui présente un écart inférieur à 0,1 dioptrie en valeur absolue, par rapport à la valeur-seuil de perception de flou qui a été obtenue pour le porteur. Autrement dit, ce verre qui est sélectionné correspond à la fois à la prescription du porteur et présente, pour la direction de regard D_{R}, une valeur de flou qui est sensiblement égale à la valeur-seuil obtenue pour le porteur. Lorsque ce verre initial existe parmi la série de verres progressifs qui est utilisée, il forme lui-même le verre final.

A titre d'exemples, on considère trois futurs porteurs de verres progressifs selon l'invention, pour lesquels les valeurs d'addition prescrites et les valeurs-seuils de perception du flou sont données dans le tableau suivant :

| | Porteur 1 | Porteur 2 | Porteur 3 |
|---|---|---|---|
| | Jeune presbyte | Presbyte moyen | Presbyte avancé |
| Addition prescrite | 1,00 dioptrie | 2,00 dioptries | 3,00 dioptries |
| Test de perception de flou | Détection du flou | Gêne visuelle | Perte de lisibilité |
| Valeur-seuil de flou | 0,30 dioptrie | 0,70 dioptrie | 0,70 dioptrie |
| Première contribution C₁ au flou du verre | nulle | 0,5 x \|P-PPO\| | \|P-PPO\| |
| Verres initiaux | Figure 2a | Figure 2b | Figure 2c |
| Verre final sélectionné | D5 | D14 | D23 |

Ce tableau indique en outre le test de perception du flou et la formule de calcul de la première contribution au flou des verres initiaux qui sont utilisés pour chacun des porteurs. La sélection du verre final pour chaque porteur est illustrée sur la figure correspondante en y reportant la valeur de référence d'azimut β_{R} et la valeur-seuil de perception du flou déterminée pour le porteur, notée VS. Celui des verres initiaux dont le profil de flou pour la valeur de référence d'élévation α_{R} passe par le point de coordonnées β_{R} et VS dans le diagramme correspondant est le verre final qui est sélectionné.

Eventuellement, il est possible que l'écart de flou pour la direction D_{R}, par rapport à la valeur-seuil de perception du flou qui a été obtenue pour le porteur, soit supérieur à 0,1 dioptrie en valeur absolue pour tous les verres progressifs de la série utilisée qui correspondent à la prescription du porteur. Dans ce cas, au moins deux verres initiaux peuvent être sélectionnés dans la série qui correspondent chacun à la prescription, et leurs caractéristiques individuelles sont combinées mathématiquement pour former un verre final dont le flou, pour la direction D_{R}, est égal à la valeur-seuil obtenue pour le porteur à moins de 0,1 dioptrie près. Une telle combinaison de verres dont les caractéristiques sont disponibles, pour former un nouveau verre qui satisfait une condition requise telle que la valeur-seuil du flou pour la direction D_{R}, est connue de l'Homme du métier. Par exemple, les surfaces qui forment une même face des verres sont décrites par des valeurs de hauteur sagittale mesurée par rapport à une surface de référence. La surface du verre final est alors écrite comme une combinaison linéaire des surfaces correspondantes des verres initiaux sélectionnés, avec des coefficients dans la combinaison linéaire qui sont optimisés numériquement pour que le verre final satisfasse la condition requise.

Selon une alternative de mise en oeuvre de l'invention, les verres de la série peuvent être définis par des caractérisations numériques respectives qui sont enregistrées. La direction de regard de référence D_{R} est alors fixée de la même façon que cela a été décrit plus haut, de même que la valeur-seuil VS de perception du flou qui est obtenue pour le porteur. La sélection du verre final dans cette alternative de mise en oeuvre de l'invention peut comprendre les sous-étapes suivantes :
- sélectionner un verre initial dans la série pour qu'il corresponde à la prescription qui a été obtenue pour le porteur, et éventuellement en fonction d'une valeur d'un paramètre additionnel qui est établi pour le porteur ; puis
- optimiser numériquement le verre final à partir du verre initial ainsi sélectionné en introduisant dans l'optimisation la valeur-seuil de perception de flou qui a été obtenue pour le porteur en tant que valeur-cible du flou pour les valeurs de référence d'élévation α_{R} et d'azimut β_{R}.

Dans ce cas, l'optimisation porte sur les caractéristiques optiques du verre final, à la différence du cas précédent où l'optimisation portait sur les coefficients de la combinaison linéaire des verres initiaux qui ont été sélectionnés dans la série utilisée.

Le paramètre additionnel qui est utilisé facultativement pour sélectionner le verre initial, en plus de la prescription du porteur, peut être l'un des paramètres qui sont usuellement utilisés pour sélectionner un design de verre progressif. Par exemple, ce peut être une amplitude relative de rotation des yeux qui est déterminée pour le porteur, par rapport à des mouvements de rotation de sa tête lorsqu'il regarde successivement des objets qui sont situés dans des directions différentes.

Ainsi, le verre final peut être sélectionné de diverses façons conformément aux différents modes de mise en oeuvre de l'invention qui ont été décrits. Il peut être directement l'un des verres disponibles initialement dans la série. Alternativement, le verre final peut ne pas appartenir à la série de verres progressifs qui sont initialement disponibles. Dans ce cas, il peut être résulter d'une combinaison appropriée de plusieurs des verres de la série, ou résulter d'une optimisation optique qui est réalisée à partir de l'un des verres de la série.

Enfin, le verre qui est fourni au porteur est réalisé conformément au verre final qui a été sélectionné. Lorsque ce verre final est un verre semi-fini disponible qui possède une face définitive conforme à l'addition prescrite et à la valeur-seuil du flou pour la direction D_{R}, il peut être réalisé en usinant son autre face. Cet usinage produit une forme sphérique ou torique qui est conforme à la valeur de puissance optique prescrite pour la vision de loin et à la caractérisation d'astigmatisme de la prescription du porteur, compte tenu de la courbure de la face définitive pour la direction de référence pour la vision de loin. Alternativement, le verre final peut être usiné point par point sur l'une au moins de ses deux faces, par exemple en utilisant le procédé d'usinage connu sous l'appellation «freeform^{®}».

Enfin, de façon générale dans une mise en oeuvre quelconque de l'invention, le verre final peut être sélectionné de préférence de sorte que sa valeur de flou pour les valeurs de référence d'élévation α_{R} et d'azimut β_{R} présente un écart qui est inférieur à 0,05 dioptrie en valeur absolue.

## Revendications

1. Procédé de réalisation d'un verre de lunettes progressif (1) destiné à un porteur identifié (100), et personnalisé en fonction d'une perception de flou par ledit porteur, comprenant les étapes suivantes :
/1/ obtenir une prescription ophtalmique pour le porteur, comprenant une valeur prescrite de puissance optique en vision de loin, une valeur prescrite d'addition et une caractérisation d'un astigmatisme dudit porteur ;
/2/ obtenir une valeur-seuil (VS) de perception de flou pour le porteur ;
/3/ obtenir des valeurs de flou respectives pour une série de verres ophtalmiques progressifs (D1-D8, D11-D18, D21-D28) correspondant chacun à la prescription du porteur, et pour une direction de regard de référence (D_{R}) décalée transversalement par rapport à une ligne méridienne (LM) des verres, ladite direction de regard de référence étant déterminée par une valeur de référence d'élévation (α_{R}) le long de la ligne méridienne et une valeur de référence d'azimut (β_{R}) mesurée transversalement à partir d'un plan vertical contenant une direction de regard (Do) droit devant le porteur lorsque la tête du porteur est elle-même verticale, la série de verres comprenant plusieurs verres correspondant à des valeurs variables de flou pour les valeurs de référence d'élévation (α_{R}) et d'azimut (β_{R}) ;
/4/ sélectionner un verre final (D5 ; D14 ; D23) à partir d'au moins un verre initial appartenant à la série utilisée à l'étape /3/, ledit verre final correspondant à la prescription du porteur et ayant une valeur de flou pour les valeurs de référence d'élévation et d'azimut qui présente un écart inférieur à 0,1 dioptrie en valeur absolue, par rapport à la valeur-seuil de perception de flou obtenue pour le porteur à l'étape /2/ ; et
/5/ réaliser le verre de lunettes destiné au porteur conformément au verre final sélectionné à l'étape /4/ ;
la valeur de référence d'azimut (β_{R}) étant comprise entre 10° et 20°, en valeur absolue, ou obtenue à partir d'une mesure d'une amplitude de mouvements d'yeux effectués par le porteur (100) pour permettre d'ajuster la largeur du champ du verre dans lequel le flou est limité à la partie du verre qui sera la plus utilisée par le porteur,
suivant lequel l'étape /2/ comprend les deux sous-étapes suivantes :
/2-1/ sélectionner un critère de perception de flou en fonction de la valeur d'addition prescrite pour le porteur, parmi les critères suivants :
- lorsque la valeur d'addition prescrite pour le porteur est inférieure ou égale à une première valeur fixée d'addition, la valeur-seuil de perception de flou est une première limite de flou en deçà de laquelle ledit porteur ne détecte pas le flou, et au delà de laquelle ledit porteur détecte le flou ;
- lorsque la valeur d'addition prescrite pour le porteur est comprise entre la première valeur fixée d'addition et une seconde valeur fixée d'addition supérieure à ladite première valeur fixée d'addition, la valeur-seuil de perception de flou est une deuxième limite de flou en deçà de laquelle ledit porteur ne ressent pas de gêne visuelle causée par le flou, et au-delà de laquelle ledit porteur ressent une gêne visuelle causée par le flou ; et
- lorsque la valeur d'addition prescrite pour le porteur est supérieure ou égale à la seconde valeur fixée d'addition, la valeur-seuil de perception de flou est une troisième limite de flou en deçà de laquelle ledit porteur est capable de lire des caractères alphanumériques, et au-delà de laquelle ledit porteur n'est plus capable de lire les caractères alphanumériques à cause du flou ; puis
/2-2/ déterminer la valeur-seuil (VS) de perception de flou pour le porteur (100) en utilisant le critère sélectionné.

2. Procédé selon la revendication 1, suivant lequel la valeur-seuil (VS) de perception de flou est déterminée pour le porteur (100) à la sous-étape /2-2/ en réalisant un test de perception de flou par ledit porteur, en utilisant le critère sélectionné à la sous-étape /2-1/.

3. Procédé selon la revendication 2, suivant lequel le test de perception de flou comprend une visualisation par le porteur (100) d'une image (C) à travers un système optique (10), ledit système optique étant adapté pour produire une défocalisation variable de l'image par rapport à un réglage de mise au point de ladite image regardée par le porteur.

4. Procédé selon la revendication 2, suivant lequel le test de perception de flou comprend une visualisation par le porteur (100) d'une image (C) affichée sur un écran (12), avec un flou simulé introduit numériquement dans les données d'affichage de l'image.

5. Procédé selon l'une quelconque des revendications précédentes, suivant lequel la première valeur fixée d'addition est comprise entre 1,50 et 1,75 dioptries, et la seconde valeur fixée d'addition est comprise entre 2,25 et 2,50 dioptries.

6. Procédé selon l'une quelconque des revendications 1 à 5, suivant lequel la valeur de référence d'azimut (β_{R}) est comprise entre 13° et 17°, en valeur absolue.

7. Procédé selon l'une quelconque des revendications précédentes, suivant lequel la direction de regard de référence (D_{R}) traverse l'un au moins des verres (D1-D8, D11-D18, D21-D28) de la série utilisée à l'étape /3/ dans une zone de vision de près ou dans une zone de vision de loin dudit verre, ou à une limite latérale d'une des dites zones.

8. Procédé selon la revendication 7, suivant lequel la valeur de référence d'élévation (α_{R}) est comprise entre 20° et 45°, de préférence entre 26° et 38°, ou est comprise entre -10° et 2° par rapport à une direction de regard (D₀) passant par une croix de montage (CM) de chaque verre (D1-D8, D11-D18, D21-D28), lesdites valeurs d'élévation étant positives et négatives pour des directions de regard (D) passant en dessous de et au dessus de la croix de montage, respectivement.

9. Procédé selon l'une quelconque des revendications précédentes, suivant lequel la valeur de flou obtenue à l'étape /3/ pour chaque verre de la série (D1-D8, D11-D18, D21-D28) est calculée comme une somme comprenant les deux contributions suivantes :
- une première contribution positive fonction d'une première différence absolue entre d'une part une valeur de puissance optique déduite de la prescription du porteur (100) pour la valeur de référence d'élévation (α_{R}), et d'autre part une valeur de puissance optique du verre pour les dites valeurs de référence respectives d'élévation (α_{R}) et d'azimut (β_{R}) ; et
- une seconde contribution positive fonction d'une seconde différence absolue entre, d'une part la caractérisation de l'astigmatisme du porteur (100) obtenue à l'étape /1/, et d'autre part une caractérisation d'astigmatisme du verre pour les dites valeurs de référence respectives d'élévation (α_{R}) et d'azimut (β_{R}) ;
ladite première contribution variant en outre en fonction de la valeur d'addition du verre de sorte que, pour au moins une valeur fixée de la première différence, la première contribution est une fonction croissante ou croissante par paliers de ladite valeur d'addition du verre.

10. Procédé selon la revendication 9, suivant lequel la première contribution est égale à la première différence absolue multipliée par un facteur égal à :
zéro lorsque la valeur d'addition du verre est inférieure ou égale à la première valeur fixée d'addition ;
un demi lorsque la valeur d'addition du verre est comprise entre la première valeur fixée d'addition et la seconde valeur fixée d'addition ; et
l'unité lorsque la valeur d'addition du verre est supérieure ou égale à la seconde valeur fixée d'addition.

11. Procédé selon la revendication 9, suivant lequel la première contribution est égale à la première différence absolue divisée par une fonction décroissante de la valeur d'addition du verre, ou divisée par une fonction croissante d'une amplitude d'accommodation déterminée pour le porteur (100).

12. Procédé selon l'une quelconque des revendications 1 à 11, suivant lequel
l'étape /4/ comprend une sélection du verre initial dans la série de verre de sorte que ledit verre initial corresponde lui-même à la prescription du porteur et
ait une valeur de flou pour les valeurs de référence d'élévation et d'azimut qui présente un écart inférieur à 0,1 dioptrie en valeur absolue, par rapport à la valeur-seuil (VS) de perception de flou obtenue pour le porteur (100) à l'étape /2/, ledit verre initial formant lui-même le verre final sélectionné (D5 ; D14 ; D23).

13. Procédé selon l'une quelconque des revendications 1 à 11, suivant lequel les verres de la série utilisée à l'étape /3/ sont définis par des caractérisations numériques respectives enregistrées, et suivant lequel l'étape /4/ comprend les sous-étapes suivantes :
/4-1/ sélectionner le verre initial dans la série utilisée à l'étape /3/, de sorte que ledit verre initial corresponde à la prescription obtenue à l'étape /1/ pour le porteur (100), et éventuellement en fonction d'une valeur d'un paramètre additionnel établi pour le porteur ; puis
/4-2/ optimiser numériquement le verre final à partir du verre initial en introduisant dans l'optimisation la valeur-seuil (VS) de perception de flou obtenue à l'étape /2/ pour le porteur (100) en tant que valeur-cible du flou pour les valeurs de référence d'élévation (α_{R}) et d'azimut (β_{R}).

14. Procédé selon l'une quelconque des revendications précédentes, suivant lequel le verre final est sélectionné à l'étape /4/ de sorte que la valeur de flou dudit verre final pour les valeurs de référence d'élévation (α_{R}) et d'azimut (β_{R}) présente un écart inférieur à 0,05 dioptrie en valeur absolue, par rapport à la valeur-seuil (VS) de perception de flou obtenue pour le porteur (100) à l'étape /2/.

## Patentansprüche

1. Verfahren zum Herstellen eines progressiven Brillenglases (1), das für einen identifizierten Träger (100) bestimmt ist und als Funktion einer Unschärfenwahrnehmung durch den Träger personalisiert ist, das die folgenden Schritte umfasst:
/1/ Erhalten einer ophthalmischen Verschreibung für den Träger, die einen verschriebenen Wert der optischen Fernsichtleistung, einen verschriebenen Additionswert und eine Charakterisierung eines Astigmatismus des Trägers enthält;
/2/ Erhalten eines Schwellenwertes (VS) der Unschärfenwahrnehmung für den Träger;
/3/ Erhalten von jeweiligen Unschärfewerten für eine Reihe progressiver ophthalmischer Gläser (D1-D8, D11-D18, D21-D28), die jeweils der Verschreibung des Trägers entsprechen und für eine Referenzblickrichtung (D_{R}), die in Bezug auf eine Meridianlinie (LM) der Gläser transversal versetzt ist, wobei die Referenzblickrichtung durch einen Elevationsreferenzwert (α_{R}) längs der Meridianlinie und durch einen Referenzazimutwert (β_{R}), der transversal ausgehend von einer vertikalen Ebene, die eine gerade Blickrichtung (D₀) vor dem Träger enthält, wenn der Kopf des Trägers seinerseits vertikal ausgerichtet ist, gemessen wird, bestimmt wird, wobei die Reihe von Gläsern mehrere Gläser enthält, die veränderlichen Unschärfewerten für die Referenzelevationswerte (α_{R}) und Referenzazimutwerte (β_{R}) entsprechen;
/4/ Wählen eines endgültigen Glases (D5; D14; D23) ausgehend von wenigstens einem anfänglichen Glas, das zu der im Schritt /3/ verwendeten Reihe gehört, wobei das endgültige Glas der Verschreibung des Trägers entspricht und einen Unschärfewert für die Referenzelevations- und Referenzazimutwerte besitzt, der einen Abstand von weniger als 0,1 Dioptrien dem Absolutwert nach in Bezug auf den Schwellenwert der Unschärfewahrnehmung, der für den Träger im Schritt /2/ erhalten wird, aufweist; und
/5/ Herstellen des Brillenglases, das für den Träger bestimmt ist, in Übereinstimmung mit dem im Schritt /4/ gewählten endgültigen Glas;
wobei der Referenzazimutwert (β_{R}) im Bereich von 10° bis 20° dem Absolutwert nach liegt oder ausgehend von einer Messung einer Amplitude von Augenbewegungen, die von dem Träger (100) ausgeführt werden, erhalten wird, um zu ermöglichen, die Breite des Feldes des Glases, in dem die Unschärfe begrenzt ist, anhand des Glases einzustellen, das von dem Träger am meisten verwendet wird,
wobei der Schritt /2/ die zwei folgenden Unterschritte umfasst:
/2-1/ Wählen eines Kriteriums der Unschärfewahrnehmung als Funktion des für den Träger verschriebenen Additionswerts unter den folgenden Kriterien:
- wenn der für den Träger verschriebene Additionswert kleiner oder gleich einem ersten festen Additionswert ist, ist der Schwellenwert der Unschärfewahrnehmung eine erste Unschärfegrenze, unterhalb derer der Träger die Unschärfe nicht wahrnimmt und oberhalb derer der Träger die Unschärfe wahrnimmt;
- wenn der für den Träger verschriebene Additionswert zwischen dem ersten festen Additionswert und einem zweiten festen Additionswert, der größer als der erste feste Additionswert ist, liegt, ist der Schwellenwert der Unschärfewahrnehmung eine zweite Unschärfegrenze, unterhalb derer der Träger keine durch die Unschärfe verursachte visuelle Einschränkung bemerkt und oberhalb derer der Träger eine durch die Unschärfe verursachte visuelle Einschränkung bemerkt; und
- wenn der für den Träger verschriebene Additionswert größer oder gleich dem zweiten festen Additionswert ist, ist der Schwellenwert der Unschärfewahrnehmung eine dritte Unschärfegrenze, unterhalb derer der Träger alphanumerische Zeichen lesen kann und oberhalb derer der Träger aufgrund der Unschärfe nicht mehr in der Lage ist, alphanumerische Zeichen zu lesen; dann
/2-2/ Bestimmen des Schwellenwerts (VS) der Unschärfewahrnehmung für den Träger (100) unter Verwendung des gewählten Kriteriums.

2. Verfahren nach Anspruch 1, wobei der Schwellenwert (VS) der Unschärfewahrnehmung für den Träger (100) im Unterschritt /2-2/ durch Ausführen eines Tests der Unschärfewahrnehmung durch den Träger unter Verwendung des im Unterschritt /2-1/ gewählten Kriteriums bestimmt wird.

3. Verfahren nach Anspruch 2, wobei der Unschärfewahrnehmungstest eine Betrachtung durch den Träger (100) eines Bildes (C) durch ein optisches System (10) umfasst, wobei das optische System dafür ausgelegt ist, eine variable Defokalisierung des Bildes in Bezug auf eine Schärfeneinstellung des von dem Träger betrachteten Bildes zu erzeugen.

4. Verfahren nach Anspruch 2, wobei der Unschärfewahrnehmungstest eine Visualisierung durch den Träger (100) eines auf einem Bildschirm (12) angezeigten Bildes (C) mit einer simulierten Unschärfe, die in die Anzeigedaten des Bildes digital eingeführt wird, umfasst.

5. Verfahren nach einem der vorhergehenden Ansprüche, wobei der erste feste Additionswert im Bereich von 1,50 bis 1,75 Dioptrien liegt und der zweite feste Additionswert im Bereich von 2,25 bis 2,50 Dioptrien liegt.

6. Verfahren nach einem der Ansprüche 1 bis 5, wobei der Azimutreferenzwert (β_{R}) im Bereich von 13° bis 17° dem Absolutwert nach liegt.

7. Verfahren nach einem der vorhergehenden Ansprüche, wobei die Referenzblickrichtung (D_{R}) wenigstens eines der Gläser (D1-D8, D11-D18, D21-D28) der im Schritt /3/ verwendeten Reihe in einer Sichtzone in der Nähe einer Fernsichtzone des Glases oder in dieser Zone oder bei einer seitlichen Grenze einer dieser Zonen durchquert.

8. Verfahren nach Anspruch 7, wobei der Referenzelevationswert (α_{R}) im Bereich von 20° bis 45°, vorzugsweise zwischen 26° und 38°, liegt oder im Bereich von -10° bis 2° in Bezug auf eine Blickrichtung (D₀) liegt, die durch ein Montagekreuz (CM) jedes Glases (D1-D8, D11-D18, D21-D28) läuft, wobei die Elevationswerte für Blickrichtungen (D), die unterhalb bzw. oberhalb des Montagekreuzes laufen, positiv bzw. negativ sind.

9. Verfahren nach einem der vorhergehenden Ansprüche, wobei der im Schritt /3/ für jedes Glas der Reihe (D1-D8, D11-D18, D21-D28) erhaltene Unschärfewert als eine Summe berechnet wird, die die beiden folgenden Beiträge enthält:
- einen ersten positiven Beitrag als Funktion einer ersten absoluten Differenz zwischen einerseits einem Wert der optischen Leistung, der von der Verschreibung des Trägers (100) für den Referenzelevationswert (α_{R}) abgeleitet wird, und andererseits einem Wert der optischen Leistung des Glases für die jeweiligen Referenzelevationswerte (α_{R}) und Referenzazimutwerte (β_{R}); und
- einen zweiten positiven Beitrag als Funktion einer zweiten absoluten Differenz zwischen einerseits der Charakterisierung des Astigmatismus des Trägers (100), die im Schritt /1/ erhalten wird, und andererseits einer Charakterisierung des Astigmatismus des Glases für die Referenzelevationswerte (α_{R}) bzw. Referenzazimutwerte (β_{R});
wobei sich der erste Beitrag außerdem als Funktion des Additionswertes des Glases ändert, derart, dass für wenigstens einen festen Wert der ersten Differenz der erste Beitrag eine wachsende oder schrittweise wachsende Funktion des Additionswertes des Glases ist.

10. Verfahren nach Anspruch 9, wobei der erste Beitrag gleich der ersten absoluten Differenz, multipliziert mit einem Faktor ist, der gleich:
0 ist, wenn der Additionswert des Glases kleiner oder gleich dem ersten festen Additionswert ist;
1/2 ist, wenn der Additionswert des Glases zwischen dem ersten festen Additionswert und dem zweiten festen Additionswert liegt; und
1 ist, wenn der Additionswert des Glases größer oder gleich dem zweiten festen Additionswert ist.

11. Verfahren nach Anspruch 9, wobei der erste Beitrag gleich der ersten absoluten Differenz, dividiert durch eine abnehmende Funktion des Additionswertes des Glases oder dividiert durch eine zunehmende Funktion einer bestimmten Akkomodationsamplitude für den Träger (100) ist.

12. Verfahren nach einem der Ansprüche 1 bis 11, wobei der Schritt /4/ eine Auswahl des anfänglichen Glases in der Glasreihe umfasst, derart, dass das anfängliche Glas seinerseits der Verschreibung des Trägers entspricht und einen Unschärfewert für die Referenzelevations- und Referenzazimutwerte besitzt, der einen Abstand von weniger als 0,1 Dioptrien dem Absolutwert nach in Bezug auf den Schwellenwert (VS) der Unschärfewahrnehmung aufweist, der für den Träger (100) im Schritt /2/ erhalten wird, wobei das anfängliche Glas seinerseits das gewählte endgültige Glas (D5; D14; D23) bildet.

13. Verfahren nach einem der Ansprüche 1 bis 11, wobei die Gläser der Reihe, die im Schritt /3/ verwendet wird, durch aufgezeichnete jeweilige digitale Charakterisierungen definiert sind und wobei der Schritt /4/ die folgenden Unterschritte umfasst:
/4-1/ Wählen des anfänglichen Glases in der im Schritt /3/ verwendeten Reihe in der Weise, dass das anfängliche Glas der im Schritt /1/ für den Träger (100) erhaltenen Verschreibung entspricht und eventuell eine Funktion eines Wertes eines zusätzlichen Parameters ist, der für den Träger erzeugt wird; dann
/4-2/ digitales Optimieren des endgültigen Glases anhand des anfänglichen Glases durch Einführen des Schwellenwertes (VS) für die Unschärfewahrnehmung, der im Schritt /2/ für den Träger (100) erhalten wird, in die Optimierung als Sollwert der Unschärfe für die Referenzelevationswerte (α_{R}) und Referenzazimutwerte (β_{R}).

14. Verfahren nach einem der vorhergehenden Ansprüche, wobei das endgültige Glas im Schritt /4/ in der Weise gewählt wird, dass der Unschärfewert des endgültigen Glases für die Referenzelevationswerte (α_{R}) und Referenzazimutwerte (β_{R}) einen Abstand von weniger als 0,05 Dioptrien dem Absolutwert nach in Bezug auf den Schwellenwert (VS) der Unschärfewahrnehmung, der für den Träger (100) im Schritt /2/ erhalten wird, aufweist.

## Claims

1. Method for making a progressive spectacle lens (1) intended for an identified wearer (100), and customized as a function of a perception of blur by said wearer, comprising the following steps:
/1/ obtaining an ophthalmic prescription for the wearer, comprising a prescribed value of optical power in far vision, a prescribed addition value and a characterization of an astigmatism of said wearer;
/2/ obtaining a blur perception threshold value (VS) for the wearer;
/3/ obtaining respective blur values for a series of progressive ophthalmic lenses (D1-D8, D11-D18, D21-D28) each corresponding to the prescription of the wearer, and for a reference direction of gaze (D_{R}) offset transversely with respect to a meridian line (LM) of the lenses, said reference direction of gaze being determined by an elevation reference value (α_{R}) along the meridian line and an azimuth reference value (β_{R}) measured transversely from a vertical plane containing a direction of gaze (D₀) straight ahead of the wearer when the head of the wearer is itself vertical, the series of lenses comprising several lenses corresponding to variable values of blur for the reference values of elevation (α_{R}) and of azimuth (β_{R}) ;
/4/ selecting a final lens (D5; D14; D23) on the basis of at least one initial lens belonging to the series used in step /3/, said final lens corresponding to the wearer's prescription and having a blur value for the elevation and azimuth reference values which exhibits a discrepancy of less than 0.1 diopters in absolute value, with respect to the blur perception threshold value obtained for the wearer in step /2/; and
/5/ making the spectacle lens intended for the wearer in accordance with the final lens selected in step /4/;
the azimuth reference value (β_{R}) lying between 10° and 20°, in absolute value, or obtained on the basis of a measurement of an amplitude of eye movements performed by the wearer (100) so as to make it possible to adjust the width of the field of the lens in which the blur is limited to the part of the lens which will be used most by the wearer,
in accordance with which step /2/ comprises the following two sub-steps:
/2-1/ selecting a blur perception criterion as a function of the prescribed addition value for the wearer, from among the following criteria:
- when the prescribed addition value for the wearer is less than or equal to a first fixed addition value, the blur perception threshold value is a first blur limit below which said wearer does not detect the blur, and beyond which said wearer detects the blur;
- when the prescribed addition value for the wearer lies between the first fixed addition value and a second fixed addition value greater than said first fixed addition value, the blur perception threshold value is a second blur limit below which said wearer does not experience any visual inconvenience caused by the blur, and beyond which said wearer experiences visual inconvenience caused by the blur; and
- when the prescribed addition value for the wearer is greater than or equal to the second fixed addition value, the blur perception threshold value is a third blur limit below which said wearer is capable of reading alphanumeric characters, and beyond which said wearer is no longer capable of reading the alphanumeric characters because of the blur; and then
/2-2/ determining the blur perception threshold value (VS) for the wearer (100) by using the selected criterion.

2. Method according to Claim 1, in accordance with which the blur perception threshold value (VS) is determined for the wearer (100) in sub-step /2-2/ by carrying out a test of blur perception by said wearer, using the criterion selected in sub-step /2-1/.

3. Method according to Claim 2, in accordance with which the blur perception test comprises a viewing by the wearer (100) of an image (C) through an optical system (10), said optical system being adapted for producing a variable defocusing of the image with respect to a fine-tuning adjustment of said image looked at by the wearer.

4. Method according to Claim 2, in accordance with which the blur perception test comprises a viewing by the wearer (100) of an image (C) displayed on a screen (12), with a simulated blur introduced numerically into the display data of the image.

5. Method according to any one of the preceding claims, in accordance with which the first fixed addition value lies between 1.50 and 1.75 diopters, and the second fixed addition value lies between 2.25 and 2.50 diopters.

6. Method according to any one of Claims 1 to 5, in accordance with which the azimuth reference value (β_{R}) lies between 13° and 17°, in absolute value.

7. Method according to any one of the preceding claims, in accordance with which the reference direction of gaze (D_{R}) passes through at least one of the lenses (D1-D8, D11-D18, D21-D28) of the series used in step /3/ in a near vision zone or in a far vision zone of said lens, or at a lateral limit of one of said zones.

8. Method according to Claim 7, in accordance with which the elevation reference value (α_{R}) lies between 20° and 45°, preferably between 26° and 38°, or lies between -10° and 2° with respect to a direction of gaze (D₀) passing through a fitting cross (CM) of each lens (D1-D8, D11-D18, D21-D28), said elevation values being positive and negative for directions of gaze (D) passing below and above the fitting cross, respectively.

9. Method according to any one of the preceding claims, in accordance with which the blur value obtained in step /3/ for each lens of the series (D1-D8, D11-D18, D21-D28) is calculated as a sum comprising the following two contributions:
- a first positive contribution dependent on a first absolute difference between on the one hand an optical power value deduced from the prescription of the wearer (100) for the elevation reference value (α_{R}), and on the other hand an optical power value of the lens for said respective reference values of elevation (α_{R}) and of azimuth ((β_{R}) ; and
- a second positive contribution dependent on a second absolute difference between, on the one hand the characterization of the astigmatism of the wearer (100) obtained in step /1/, and on the other hand a characterization of astigmatism of the lens for said respective reference values of elevation (α_{R}) and of azimuth (β_{R});
said first contribution furthermore varying as a function of the addition value of the lens so that, for at least one fixed value of the first difference, the first contribution is an increasing or stepwise increasing function of said addition value of the lens.

10. Method according to Claim 9, in accordance with which the first contribution is equal to the first absolute difference multiplied by a factor equal to:
zero when the addition value of the lens is less than or equal to the first fixed addition value;
a half when the addition value of the lens lies between the first fixed addition value and the second fixed addition value; and
unity when the addition value of the lens is greater than or equal to the second fixed addition value.

11. Method according to Claim 9, in accordance with which the first contribution is equal to the first absolute difference divided by a decreasing function of the addition value of the lens, or divided by an increasing function of an amplitude of accommodation determined for the wearer (100).

12. Method according to any one of Claims 1 to 11, in accordance with which
step /4/ comprises a selection of the initial lens in the lens series so that said initial lens itself corresponds to the wearer's prescription and has a blur value for the elevation and azimuth reference values which exhibits a discrepancy of less than 0.1 diopters in absolute value, with respect to the blur perception threshold value (VS) obtained for the wearer (100) in step /2/, said initial lens itself forming the selected final lens (D5; D14; D23).

13. Method according to any one of Claims 1 to 11, in accordance with which the lenses of the series used in step /3/ are defined by recorded respective numerical characterizations, and in accordance with which step /4/ comprises the following sub-steps:
/4-1/ selecting the initial lens in the series used in step /3/, so that said initial lens corresponds to the prescription obtained in step /1/ for the wearer (100), and optionally as a function of a value of an additional parameter established for the wearer; and then
/4-2/ numerically optimizing the final lens on the basis of the initial lens by introducing into the optimization the blur perception threshold value (VS) obtained in step /2/ for the wearer (100) in the guise of target value of the blur for the reference values of elevation (α_{R}) and of azimuth (β_{R}).

14. Method according to any one of the preceding claims, in accordance with which the final lens is selected in step /4/ so that the blur value of said final lens for the reference values of elevation (α_{R}) and of azimuth (β_{R}) exhibits a discrepancy of less than 0.05 diopters in absolute value, with respect to the blur perception threshold value (VS) obtained for the wearer (100) in step /2/.
